Europäisches Patentamt

European Patent Office

Office européen des brevets

(11) Publication number: **0 095 310**
**A2**

# (12) EUROPEAN PATENT APPLICATION

(21) Application number: **83302800.4**

(22) Date of filing: **17.05.83**

(51) Int. Cl.³: **G 01 N 27/72**

(30) Priority: **20.05.82 GB 8214762**
**14.07.82 GB 8220438**

(43) Date of publication of application:
**30.11.83 Bulletin 83/48**

(84) Designated Contracting States:
**DE**

(71) Applicant: **NATIONAL RESEARCH DEVELOPMENT**
**CORPORATION**
**101 Newington Causeway**
**London SE1 6BU(GB)**

(72) Inventor: **Willey, Roger James**
**72 Mulben Crescent**
**Crookston Glasgow Scotland(GB)**

(74) Representative: **Bridges, Denis Hamilton**
**Patent Department National Research Development**
**Corporation 101 Newington Causeway**
**London SE1 6BU(GB)**

(54) Apparatus and method for identification of asbestos.

(57) A sample (20) of asbestos fibres is palced adjacent a source (14, 16) of a magnetic field. A parameter of the field is measured with a device such as s pattern recognition device (20) in association with a light source (24) and optical system (26) to derive measurements which are characteristic of the asbestos type.

Fig. 4

Croydon Printing Company Ltd.

123238

APPARATUS AND METHOD FOR IDENTIFICATION OF ASBESTOS

This invention relates to the identification of asbestos fibres, and the measurement of their concentration.

It is known that asbestos fibres have magnetic properties. Asbestos fibres can be aligned in a magnetic field, and optical measurements made on the aligned fibres to determine their concentration. See for example the paper by V. Timbrell entitled "Magnetic Separation of Respirable Asbestos Fibres" given at the Institute of Electrical Engineers Second Conference on Advances in Magnetic Materials and their Application, 1976.

In the prior art, the measurements are optical measurements, and previously no direct measurement of the magnetic properties has been made. Further, the type of asbestos has previously been identified by optical methods, i.e. blue asbestos is identified by its colour, and amosite and chrysotile by their respective long, straight and long, convoluted fibres. But colour is not identifiable in a phase contrast optical arrangement, such as is conventionally used for counting fibres, and short, broken sections of a convoluted fibre may be incorrectly classified as straight.

Further, optical identification can only be applied when considerable quantities of fibres are available, and not when the apparatus operates near the limit of resolution. For very small samples, an electron microscope must be used, which is a slow, expensive test method limited to laboratory application.

In the present invention, the type of asbestos fibre can be identified by apparatus which can be portable and used in the field. Since the Advisory Committee on Asbestos has proposed control limits for exposure to dust from asbestos which depend on the fibre type, identification of fibre type is as important as a measurement of concentration.

According to the invention, there is provided apparatus for identifying asbestos fibres comprising support means to hold a sample of the fibres, magnetic field generation means positioned adjacent to said support means to apply a magnetic field to said sample and measuring means sensitive to variations in a parameter of said fibres in dependence on variations in an applied magnetic field.

There is also provided a method of identifying asbestos fibres comprising placing a sample of said fibres in a magnetic field and measuring the variation of a parameter of said sample with magnetic field strength.

In a first embodiment, a sample of airborne asbestos fibres is suspended in a liquid, the suspension is exposed to at least two magnetic fields of different, known field strengths, the proportion of fibres aligned with a predetermined direction with respect to the field direction is measured at each value of the magnetic field, and the value of the magnetic field which would cause the fibres to align completely with the magnetic field is determined. It is believed that it has not previously been realised that the magnetic field at which complete alignment occurs, which may be called the critical field, is characteristic of the fibre type in airborne asbestos. This critical magnetic field can be determined either directly, by observing the suspended particles and simultaneously increasing the applied field until the required complete alignment is achieved, or alternatively by determining the percentage alignment at each of two or more different field strengths, and extrapolating to determine the value of the critical field.

The fibres may be suspended in a thin film of liquid on a surface, e.g. the surface of a microscope slide, which is parallel to the magnetic field, and the orientation of the fibres in two dimensions at two or more different magnetic field values may be determined.

In an alternative embodiment, applicable to the identification of bulk asbestos, one or more of the fibres is precisely aligned with a magnetic field, and the magnetic moment is determined. It is believed that this is the first time that it has been realised that the fibres have characteristic magnetic moments.

The invention will now be described by way of example with reference to the accompanying drawings in which:-

Figure 1 is a view of apparatus for manual application of a first method of identifying asbestos fibres;

Figure 2 illustrates the effect of magnetic field on fibre orientation;

Figure 3 illustrates the variation in the percentage of fibres aligned in an arbitrary direction with magnetising current for three different types of airborne asbestos fibre;

Figure 4 illustrates apparatus for automatic application of the first method; and

Figure 5 illustrates the theoretical curve calculated from the Bessel functions applicable to airborne amosite asbestos fibres.

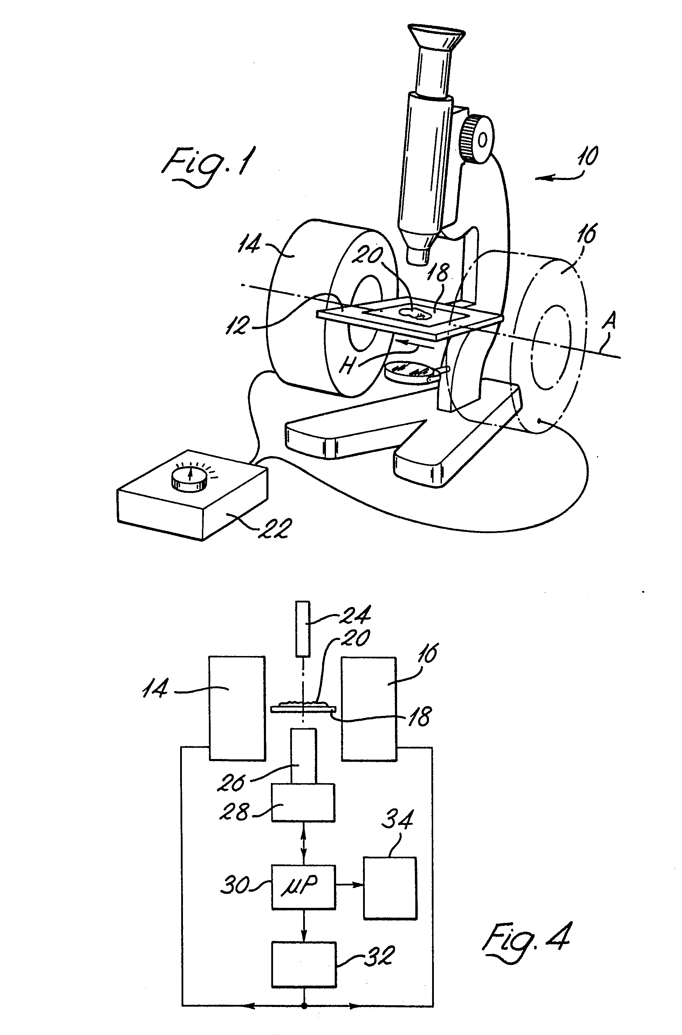

In Figure 1, an optical microscope 10 is positioned with its stage 12 horizontal and midway between the centres of two spaced magnetic coils 14, 16 which have horizontal, aligned axes, indicated by the chain dotted line A, which coincides with the upper surface of a glass slide 18 on the microscope stage. On the slide surface is a layer of liquid 20 containing a sample of airborne asbestos fibres. The liquid may for example be a 0.5% weight per volume solution of celloidin in amyl acetate, which has a slow tendency to dry on the slide, allowing easy rotation of the fibres.

The coils 14, 16 are connected to a control circuit 22 which applies a variable current to the coils, thereby generating a variable magnetic field H across the surface of the slide 18. The coils should be capable of applying a magnetic field of up to about 8 kilogauss.

In use, the control circuit 22 is operated to apply a magnetic field of known value to the sample of fibres, and the percentage of fibres aligned with a predetermined horizontal direction, e.g. at an angle of $60^{o}$ to the direction of the field H, is determined by eye. A second value of magnetic field is applied, and the new percentage estimated.

If no magnetic field was applied to the sample, the distribution of fibre angles should be random. As the field strength increases, the magnetic fibres tend to align perpendicular and/or parallel to the field, the liquid in which they are suspended allowing movement in two dimensions.

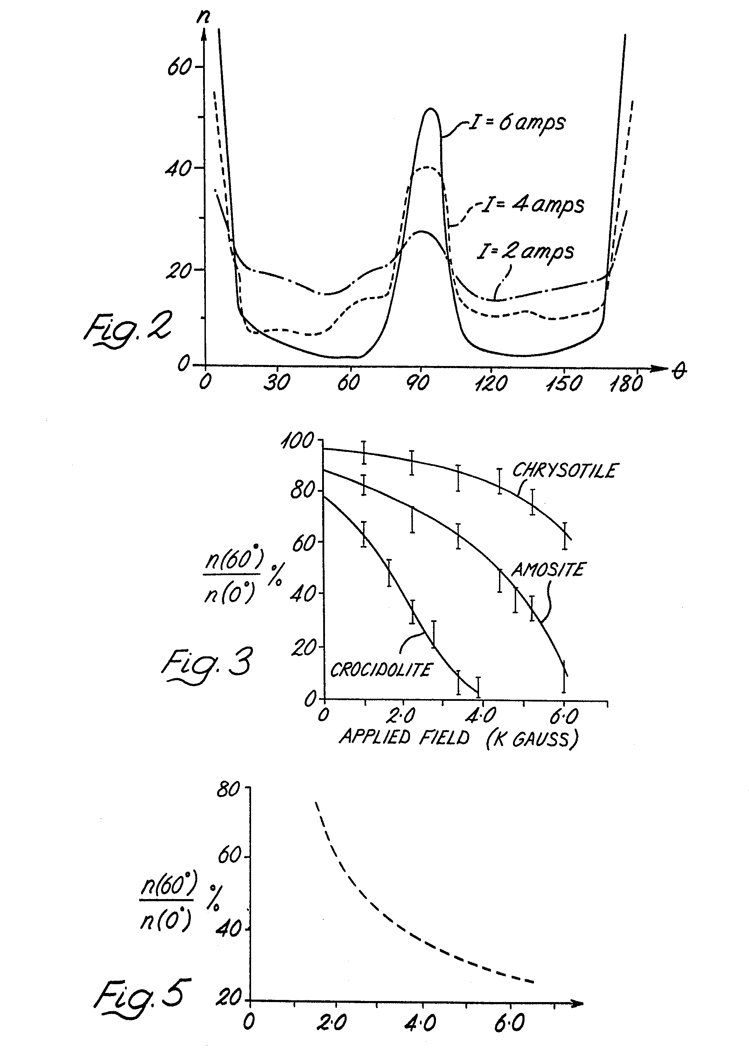

This effect is illustrated in Figure 2 in which the number of fibres $\underline{n}$ at different angles of orientation $\theta$ is plotted for three different values of current I through the coils 14, 16, of 2 amps, 4 amps and 6 amps, corresponding to three different magnetic fields. The fibre is amosite. It will be seen that the higher the field, the greater the number of fibres aligned precisely parallel with the field, or perpendicular to the field.

If an arbitrary angle is taken, say $60^{\circ}$ to the field H, and the percentage of fibres aligned in this direction to fibres aligned parallel with the field is taken, then curves such as those illustrated in Figure 3 are derived. The curves relate to chrysotile, amosite and crocidolite fibres; in each case the full curve is the best line through the measured points. For crocidolite and amosite, at a particular value of current I, there are effectively no fibres aligned with the arbitrary direction. The full curve is the best line in each case.

The particular values of current correspond to critical magnetic fields. It has been found that the critical magnetic field at which effectively non-alignment occurs is characteristic for the three different types of asbestos commonly found as airborne particles. Determination of the critical field therefore allows the identification of the fibre type. For example, the critical field for crocidolite asbestos has been found to be about 4 kilogauss; that for amosite asbestos is 6.1 kilogauss. The critical field for chrysotile asbestos is considerably higher than 6 kilogauss.

In practice, either the current through the coils is increased until the condition of no fibres aligned with the chosen direction is reached, or percentages at different magnetic fields are observed and the values extrapolated to determine the corresponding critical field. While the former method is most useful for manual application of the inventive method, an automated identification procedure can be used to apply the latter method. Suitable apparatus is illustrated diagrammatically in Figure 4. The slide 18 with layer of liquid plus airborne asbestos fibre sample 20 is positioned between the variable current magnetic coils 14, 16 as before. The slide is illuminated by a light source 24, and transmitted light is received by the optical system 26 of an electronic pattern recognition device 28 controlled by a microprocessor 30.

The microprocessor controls a current source 32 which supplies current to the magnetic coils, and also controls a display unit 34.

In operation, the microprocessor 30 sets the coil current to produce a known magnetic field, orders the pattern recognition device 28 to measure the percentage of fibres aligned with two predetermined directions, one parallel to the magnetic field, and one at an angle such as $60^{\circ}$, and stores the value of the field and the percentages. Two or more such measurements are made at different fields, and from the stored results the microprocessor calculates the critical field and provides a display of the value on display unit 34.

The manual and automatic apparatuses may also be used to determine the concentration of asbestos by counting the total number of fibres, in accordance with known techniques.

If the airborne asbestos fibres are paramagnetic, a Langevin model may be assumed for their orientation. In this case the number of fibres at a particular angle is proportional to the Boltzmann factor i.e. $\exp\left(\frac{\mu H}{kT}\right)$, and at complete saturation:

$$\mu H \simeq 7kT$$

The average magnetic moment of individual airborne fibres has been calculated from this to be:

$$\mu \simeq 5.9 \times 10^{-26} \text{ weber metre}$$

The Langevin Theory describes the distribution of magnetic moments with angle $n(\theta)$, and gives:-

$$n(\theta)\alpha \int_{x_1}^{x_2} e^{ax} \, dx \qquad (1)$$

where $a = \frac{\mu H}{kT}$ and $x = \cos\theta$

In both the manual and the automatic apparatus the fibres are only able to move in two dimensions, i.e. they are constrained to the plane of the microscope slide, therefore:-

- 6 -

$$n(\theta) \alpha \int_{\theta_1}^{\theta_2} e^{a \cos \theta} \, d\theta \qquad (2)$$

and

$$\frac{n(60)}{n(0)} = \frac{\int_{55}^{65} e^{a \cos \theta} \, d\theta}{\int_{0}^{10} e^{a \cos \theta} \, d\theta} \qquad (3)$$

These integrals may be expressed as a ratio of Bessel functions and a theoretical curve of $\frac{n(60)}{n(0)}$ constructed; the curve is plotted in Figure 5. The theoretical (Figure 5) and experimental (Figure 3) curves for amosite are in reasonable agreement at low fields but diverge at high fields. The shape of the experimental curve for amosite (Figure 5) suggests a co-operative effect and indicates that the fibres may be ferromagnetic and not paramagnetic.

In the second inventive method of identifying asbestos, applicable to bulk fibres, one or more fibres are aligned, for example by placing them in a thin-walled glass capillary tube, the aligned fibres are placed in a conventional magnetometer, and a measurement of the magnetic moment or magnetic permeability of the sample is determined. Application of a scaling factor to take account of the number of fibres measured allows the magnetic moment of bulk fibres to be calculated and, since this value is characteristic of fibre type, the asbestos can be identified. The measurement may be made manually, or by automatic apparatus incorporating a microprocessor.

In any of the measuring methods according to the invention, a rapid identification of fibre type is possible and measurements can be made in adverse environments such as on a demolition site. Further, it is believed that the technique can be extended to other fibrous materials, such as graphite, particles of which can also be orientated in a magnetic field.

## CLAIMS

1. Apparatus for identifying asbestos fibres comprising support means to hold a sample of the fibres, magnetic field generation means positioned adjacent to said support means to apply a magnetic field to said sample and measuring means sensitive to variations in a parameter of said fibres in dependence on variations in an applied magnetic field.

2. Apparatus for identifying asbestos fibres as claimed in Claim 1 wherein said measuring means includes an optical system.

3. Apparatus for identifying asbestos fibres as claimed in Claim 2 wherein said optical system includes a pattern recognition device.

4. Apparatus for identifying asbestos fibres as claimed in Claim 1 including means for supporting a sample of aligned fibres and said measuring means comprises means for measuring the magnetic moment of said sample.

5. A method of identifying asbestos fibres comprising placing a sample of said fibres in a magnetic field and measuring the variation of a parameter of said sample with magnetic field strength.

6. A method of identifying asbestos fibres as claimed in Claim 5 wherein said parameter is the adjustment of said fibres with the applied magnetic field.

7. A method of identifying asbestos fibres comprising mechanically aligning fibres of a sample and measuring the magnetic moment of the sample.

Fig.1

Fig.4

2/2

0095310

Fig. 2

Fig. 3

Fig. 5